# EUROPÄISCHE PATENTSCHRIFT

(11) **EP 2 424 820 B1**
(45) Veröffentlichungstag und Bekanntmachung des Hinweises auf die Patenterteilung: **31.05.2017**
(21) Anmeldenummer: 10715702.6
(22) Anmeldetag: 19.04.2010
(51) Int. Cl.: C02F 1/24, C02F 1/32, C02F 103/00, C02F 1/52, C02F 1/00

(54) **VORRICHTUNG ZUR KLÄRUNG VON ABWASSER, VORZUGSWEISE AUF SCHIFFEN, MIT HILFE VON DRUCKENTSPANNUNGSFLOTATION**
DEVICE FOR CLARIFYING SEWAGE BY MEANS OF DISSOLVED AIR FLOTATION, PREFERABLY ON BOARD SHIPS
DISPOSITIF D'ÉPURATION D'EAU USÉE PAR FLOTTATION À AIR DISSOUS, DE PRÉFÉRENCE À BORD DE NAVIRES

(30) Priorität: 29.04.2009 DE 102009019428
(43) Veröffentlichungstag der Anmeldung: 07.03.2012
(73) Patentinhaber: Hamann AG, 21279 Hollenstedt (DE)
(72) Erfinder: HAMANN, Knud, 21279 Appel (DE)
(74) Vertreter: Hauck Patentanwaltspartnerschaft mbB
(86) Internationale Anmeldenummer: PCT/EP2010/002386
(87) Internationale Veröffentlichungsnummer: WO 2010/124800

(56) Entgegenhaltungen:
- WO-A1-91/01276
- DE-A1- 2 150 898
- DE-A1- 19 938 248
- DE-A1-102006 056 368
- GB-A- 1 451 201
- US-A1- 2007 114 182

## Beschreibung

Die Erfindung bezieht sich auf eine Vorrichtung zur Klärung von Abwasser, vorzugsweise auf Schiffen nach Patentanspruch 1.

Bei der Klärung von Industrie- und Kommunalabwässern, jedoch auch bei der Klärung von auf Schiffen anfallendem Rohwasser ist bekannt, die sogenannte Flotation einzusetzen, insbesondere die Druckentspannungsflotation. Die Druckentspannungsflotation ist ein Trennverfahren, bei dem ein unter Druck im Wasser gelöstes Gas bei der Druckverminderung (Entspannung) ausgast und beim Aufstieg an schwebende Feststoffpartikel anlagert, so dass deren Flotation ermöglicht wird. Bei der Entspannungsflotation wird Abwasser oder ein Teilstrom des Klarwassers in der Regel bei einem Überdruck von 4 bis 6 bar mit Luft gesättigt und anschließend über die Entspannungsarmaturen in ein Flotationsbecken geleitet. Nach der Entspannung auf Atmosphärendruck perlt die überschüssige Luft in Form feiner Blasen aus. Die Gasblasen bilden in der Kontakt- und Mischzone mit den Feststoffen ein Agglomerat, das aufgrund seiner geringen Dichte an die Oberfläche des Beckens steigt und dort abgeräumt werden kann. Das Gemisch aus Gasblasen und Feststoffen wird als Flotat bezeichnet, dem häufig zusätzliche chemische Stoffe (Flockungsmittel) zugesetzt sind, um eine bessere Bindung der Feststoffe an die Gasblasen zu erreichen.

Es ist auch eine sogenannte Mikroflotation bekannt geworden, bei der in einem Behälter eine Klarphase mit Luft beaufschlagt wird, insbesondere mit einer Mehrphasenmischpumpe. Einem Luft/Wassergemisch wird ein Teilstrom von Abwasser beigemischt. Der Unterschied zur oben erwähnten Druckentspannungsflotation liegt in der geringeren Größe der Luftblasen (Mikroblasen mit 30 bis 50 µm Durchmesser).

Aus US 2007/114182 A ist eine Vorrichtung zur Klärung von Abwasser bekannt geworden umfassend einen Behälter für Rohwasser, der über mehrere Speisepumpen mit einer Flotationseinheit verbunden ist. Die Flotationseinheit dient zur Druckentspannung, wobei das nötige Gas direkt im Abwasser gelöst wird, z.B. mit Hilfe von komprimierter Luft. Eine Druckluftquelle und ein Druckbehälter sind stromaufwärts der Flotationseinheit angeordnet. In der Flotationseinheit wird das Gas-Flüssigkeitsgemisch entspannt, und es kommt zu einer gewünschten Abtrennung von Feststof-fen.

Aus DE 21 50 898 A ist eine Vorrichtung zur Klärung von Abwasser bekannt geworden, die auf der Zuflussseite eine Zerkleinerungseinrichtung aufweist. Das Rohwasser fließt von einem irgendwie gearteten Behälter zu. Eine Lufthubpumpe fördert die Flüssigkeit über eine Speiseleitung in eine Flotationsanordnung. Entlang der Speiseleitung befindet sich eine Einrichtung zur Einleitung von chemischen Vorbehandlungsstoffen, die insbesondere eine koagulierende Wirkung ausüben. Die Flotationsanlage umfasst einen Entspannungsbehälter, aus dem Flüssigkeit mittels einer Strahlpumpe abgesaugt, mit Luft aus dem Luftgebläse versetzt und zur Flotation rückgeführt wird. Aus dem Rückstrom wird in einem Kontaktbehälter eine übersättigte Lösung aus Wasser und Luft erzeugt. Die entstandene übersättigte Flüssigkeit wird über Entspannungsventile in die Flotationsanordnung eingebracht, wo das freiwerdende Gas die Flotation befördert.

Der Erfindung liegt die Aufgabe zugrunde, eine Vorrichtung zur Klärung von Abwasser, vorzugsweise auf Schiffen, zu schaffen, bei der ein möglichst geringer apparativer Aufwand erforderlich ist bei gleichzeitiger Reduzierung von Feststoffanteilen im Klarwasser. Darüber hinaus soll die Vorrichtung bedienungsfreundlich in seiner Anwendung sein.

Diese Aufgabe wird durch die Merkmale des Anspruchs 1 gelöst.

Bei der erfindungsgemäßen Vorrichtung ist ein Behälter für Rohwasser über einen Zerkleinerer (Macerator) und eine Speisepumpe mit einem Druckbehälter verbunden. Der Druckbehälter ist mit einer Druckluftquelle verbunden derart, dass das Rohwasser im Druckbehälter mit Luft gesättigt wird. Der Druckluftbehälter ist über eine Leitung mit einem Entspannungsbehälter verbunden, in dem Flotat und Klarwasser voneinander getrennt werden. In der Leitung ist ein Entspannungsventil geschaltet, und zwischen dem Entspannungsventil und Entspannungsbehälter ist über eine Dosierpumpe ein Reservoir für Flockungsmittel mit der Leitung verbunden. Im Entspannungsbehälter ist ein Festbettreaktor angeordnet. Seine naturgemäß große Oberfläche dient der Absorption organischer Substanzen, die durch das beschriebene Trennverfahren nicht abgeschieden werden können. Die biologische Reaktorzone befindet sich im unteren Bereich des Behälters.

Mit Hilfe der erfindungsgemäßen Vorrichtung lässt sich der Feststoffanteil im Reinwasser reduzieren. Eine aufwendige Trenntechnik, die zum Beispiel mit Membranen arbeitet, wie das im Stand der Technik der Fall ist, ist nicht erforderlich. Die erfindungsgemäße Vorrichtung erfordert ein geringes Bauvolumen, was insbesondere für die Anwendung auf Schiffen von großem Vorteil ist. Die erfindungsgemäße Vorrichtung ist bedienerfreundlich und reduziert die Fracht an organischen und pathogenen Bestandteilen im Reinwasser.

Der Entspannungsbehälter kann in üblicher Weise ausgeführt sein, um eine Trennung von Flotat und Klarwasser herbeizuführen. Eine besondere Ausgestaltung der Erfindung sieht hierzu vor, dass im Entspannungsbehälter ein Außenrohr angeordnet ist, in das die Leitung mündet, vorzugsweise im unteren Bereich. Im Außenrohr ist ein Innenrohr angeordnet, dass am unteren Ende mit dem Raum zwischen Entspannungsbehälter und Außenrohr in Verbindung steht. Es erstreckt sich über das Außenrohr nach oben hinaus. Ein Mittelrohr erstreckt sich zwischen Innen- und Außenrohr über das Innenrohr nach oben in Verbindung mit einer Flotatsammelkammer, und das Mittelrohr ist im unteren Bereich mit einer Klarwasserpumpe verbunden. Die erwähnten rohrartigen, vorzugsweise koaxial angeordneten Behälter sind kommunizierende Röhren, die bei geeigneter Bemessung ihrer Durchmesser und Längen relativ zueinander eine große Neigung gegenüber der Vertikalen zulassen, innerhalb der die Funktionsfähigkeit aufrechterhalten wird. Die Höhe des Innenrohrs bestimmt die Höhe des Flüssigkeitsspiegels im äußeren Behälter und damit den Spiegel des aufschwimmenden Flotats.

Das mit Luft angereicherte Rohwasser steigt im Inneren des Außenrohrs nach oben und Klarwasser strömt im Raum zwischen Außenrohr und Behälter nach unten, von wo es dann von unten in das Innenrohr eintritt. Die beschriebene Zwangsführung des Luft/Wassergemisches stellt sicher, dass eine optimale Steigzeit für die Luftblasen erreicht wird. Das Flotat schwimmt im oberen Bereich des Behälters und wird über eine, vorzugsweise mittige Öffnung nach oben in eine Flotatsammelkammer gedrückt. Das Klarwasser strömt im Überlauf vom oberen Ende des Innenrohrs in den Zwischenraum zwischen Innen- und Mittelrohr nach unten, von wo es mit Hilfe einer Pumpe von Zeit zu Zeit abgezogen wird. Es wird dann, vorzugsweise nach einer UV-Bestrahlung, über Bord geleitet. Das Flotat fließt von der Flotatsammelkammer im Behälter in einen vorzugsweise tiefer liegenden Flotatsammelbehälter. Letzterer ist vorzugsweise mit einer Leitung verbunden, in der eine Schlammpumpe angeordnet ist. Die Schlammpumpe zieht außerdem Feststoffe aus dem unteren Bereich des Entspannungsbehälters ab, die sich dort während des beschriebenen Betriebes sammeln.

Die Klarwasserpumpe wird intermittierend angetrieben und vorzugsweise vom Druck in der Zuleitung gesteuert. Die Speisepumpe wird kontinuierlich betrieben, solange sich im Rohwasserbehälter Rohwasser befindet.

Nach einer weiteren Ausgestaltung der Erfindung ist im Entspannungsbehälter mindestens eine an eine Luftdruckquelle angeschlossene Ringleitung angeordnet, die mit einer Reihe von Öffnungen versehen ist. Vorzugsweise sind zwei im Höhenabstand angeordnete Ringleitungen vorgesehen. Aus den Ringleitungen perlt Luft im Entspannungsbehälter nach oben, wodurch gleichzeitig die Flotatdecke angehoben und über einen Überlauf in den Flotatsammelbehälter befördert wird. Dieser ist seinerseits mit einem Schlammsammeltank verbunden.

Ein Ausführungsbeispiel der Erfindung wird nachfolgend anhand einer Zeichnung näher erläutert.

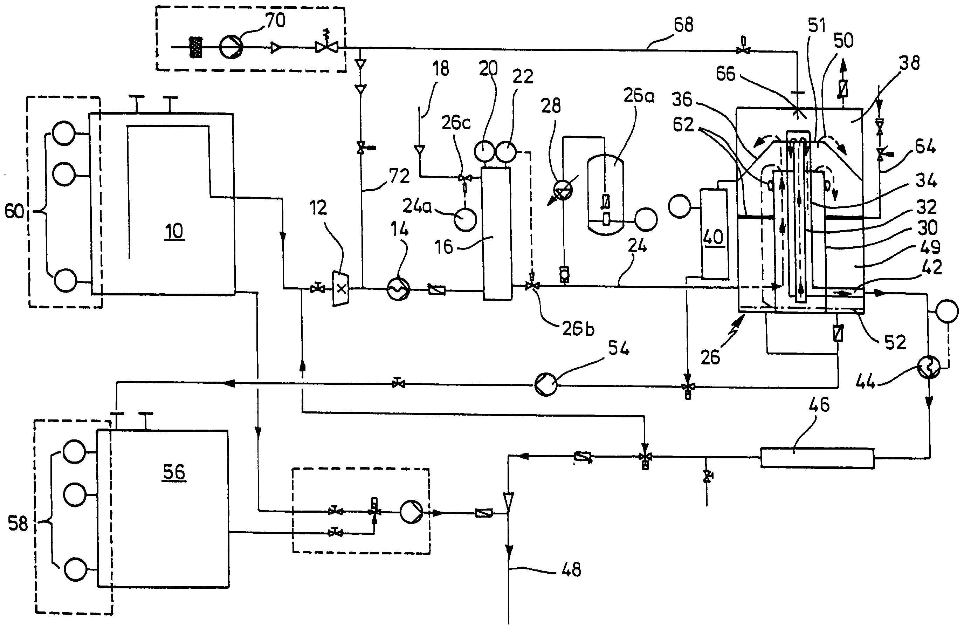

Die einzige Figur zeigt schematisch in Form eines Schaltbildes eine Vorrichtung nach der Erfindung.

Ein Rohwasserbehälter 10 ist über einen Zerkleinerer 12 (Macerator) und eine Speisepumpe 14 mit einem Druckbehälter 16 verbunden. Der Druckbehälter 16 steht mit einer nicht weiter dargestellten Druckluftquelle in Verbindung, wobei die Druckluft über eine Leitung 18 in den Behälter 16 geleitet wird. Mit dem Druckbehälter 16 sind Drucksensoren 20 bzw. 22 verbunden, wobei im Druckbehälter ein Druck von 5 bis 6 bar aufrechterhalten wird. Ein Drucksensor 24a schließt ein Ventil 26c und somit die Zufuhr von Druckluft zum Behälter 16, wenn ein vorgegebener Druck erreicht worden ist. Der Druckbehälter 16 ist über eine Leitung 24 mit einem Entspannungsbehälter 26 verbunden, auf den weiter unten näher eingegangen wird. In der Leitung 24 ist ein Druckentspannungsventil 26b angeordnet, das vom Sensor 22 gesteuert wird. Das Druckentspannungsventil verringert den Druck des Rohwasser/Luftgemisches in der Leitung 24 auf Atmosphärendruck. Ein Reservoir 26a für Flockungsmittel ist über eine Dosierpumpe 28 mit der Leitung 24 verbunden.

Der Druckentspannungsbehälter 26 weist innen, vorzugsweise mittig einen rohrförmigen Außenbehälter (Außenrohr) 30 auf sowie ein Innenrohr 32 und ein Mittelrohr 34 zwischen Innen- und Außenrohr. Die Rohre 30 bis 34 sind kommunizierende Röhren und bilden zwischen sich Ringkanäle, wobei das Innenrohr über das Außenrohr 30 oben übersteht und das Mittelrohr über das Innenrohr übersteht. Die Rohre 30 bis 34 sind koaxial und vorzugsweise zylindrisch. In Höhe des oberen Endes des Innenrohrs 32 ist dieses von einer konisch abfallenden Fläche 36 umgeben, die mit dem Behälter 26 einen Sammelraum 38 bildet. Dieser ist mit einem Sammelbehälter 40 für Flotat verbunden. Das Mittelrohr 34 ist am unteren Ende über eine Leitung 42 mit einer Klarwasserpumpe 44 verbunden, die Klarwasser über eine UV-Bestrahleinrichtung 46 schickt und von dort über Bord, wie durch die Leitung 48 angedeutet.

Die beschriebene Vorrichtung arbeitet wie folgt. Feststoffe im Rohwasser aus dem Rohwasserbehälter 10 werden im Macerator 12 zerkleinert (gröbere Feststoffe). Das Rohwasser wird mit Hilfe der Speisepumpe 14 in den Druckbehälter 16 geleitet, wo es mit Luft gesättigt wird (Saturator). Derartige Behälter sind an sich bekannt. Über das Entspannungsventil 26b findet eine Entspannung des Rohwasser/Luftgemisches statt. Außerdem wird es innerhalb der Leitung 24 mit Flockungsmittel versetzt (Dosierpumpe 28). Von dort strömt es in das Außenrohr 30 hinein und steigt in diesem nach oben, wie durch die gestrichelte Linie angedeutet. Vom Überlauf am oberen Ende des Außenrohrs 30 strömt Klarwasser zurück nach unten in das untere Ende des Innenrohrs 32 unter Zurücklassung von Flotat oberhalb des Außenrohrs 30. Das Klarwasser strömt über das obere Ende des Innenrohrs 32 nach unten in den Zwischenraum zwischen Innenrohr 30 und Mittelrohr 34, von wo es mit Hilfe der Pumpe 44 abgefördert wird. Das Flotat schwimmt oberhalb des Außenrohrs 30 auf und wird über die mittige Öffnung 51 des kegligen Bodens der Flotatsammelkammer 38 in diese gedrückt. In der Figur ist das überlaufende Flotat bei 50 dargestellt. Reststoffe, wie bei 52 strichpunktiert angedeutet, sammeln sich am Boden des Entspannungsbehälters 26 und können über eine Schlammpumpe 54 in einen Schlammbehälter 56 gefördert werden. In diesen wird auch das Flotat vom Flotatsammelbehälter 40 gefördert. Der Schlammbehälter 56 ist mit Sensoren 58 versehen, um den Füllstand zu messen. Auch der Rohwassertank 10 ist mit Füllstandssensoren 60 versehen, welche die Pumpe 14 steuern. Nur wenn der Sammelbehälter 10 Rohwasser enthält, wird die Pumpe 14 in Betrieb gesetzt.

Die Rohrgefäße 30 bis 34 bilden kommunizierende Röhren. Somit bestimmt die Höhe des Innenrohrs 32 den Flüssigkeitsstand im Behälter 26. Das obere Ende des Innenrohrs 32 liegt auf gleicher Höhe wie die Öffnung 51 der Sammelkammer 38. Das über die Öffnung 51 überstehende Mittelrohr 34 stellt die Strömung in das Mittelrohr 34 hinein sicher.

Im Entspannungsbehälter 26 befinden sich zwei Ringleitungen 62, die im Abstand übereinander angeordnet sind. Sie sind über eine Leitung 64 mit einer Druckluftquelle verbunden (nicht gezeigt). Über Öffnungen in den Ringleitungen 62 kann Luft nach oben perlen, um dadurch eine Abreinigung des Flotats zu erzielen, indem das Wasserniveau im Entspannungsbehälter 26 erhöht und die Flotatdecke angehoben wird über den Überlauf in den Sammelraum 38.

Im Behälter 26 unterhalb der unteren Ringleitung 62 befindet sich ein Festbettreaktor 49 zwecks Absorption in Reinwasser gelöster organischer Substanzen. Der Festbettreaktor 49 ist nicht weiter dargestellt und als solcher bekannt.

Im oberen Bereich des Entspannungsbehälters 26 befindet sich eine Sprühdüsenanordnung 66, die über eine Leitung 68 mit einer Wasserpumpe 70 verbunden ist, über die Spülwasser zwecks Reinigung in den Entspannungsbehälter 26 geleitet wird. Eine Leitung 72 zweigt von der Leitung 68 ab und geht zur Leitung zwischen Macerator 12 und Speisepumpe 14, um auf diesem Wege ebenfalls eine Reinigung zu bewerkstelligen.

## Patentansprüche

1. Vorrichtung zur Klärung von Abwasser vorzugsweise auf Schiffen, mit den folgenden Merkmalen:
ein Behälter (10) für Rohwasser ist über einen Zerkleinerer (12) (Macerator) und eine Speisepumpe (14) mit einem Druckbehälter (16) verbunden,
der Druckbehälter (16) ist mit einer Druckluftquelle (18) verbunden derart,
dass das Rohwasser im Druckbehälter (16) mit Luft gesättigt wird,
der Druckbehälter (16) ist über eine Leitung (24) mit einem Entspannungsbehälter (26) verbunden, in dem Flotat und Klarwasser voneinander getrennt werden,
in der Leitung (24) ist ein Entspannungsventil (26b) geschaltet,
zwischen Entspannungsventil (26b) und Entspannungsbehälter (26) ist eine Dosierpumpe (28) für Flockungsmittel mit der Leitung (24) verbunden und
im unteren Bereich des Entspannungsbehälters (26) ein Festbettreaktor (49) angeordnet ist.

2. Vorrichtung nach Anspruch 1, **dadurch gekennzeichnet, dass** im Entspannungsbehälter (26) ein Außenrohr (30) angeordnet ist, in das die Leitung (24) mündet, ein im Außenrohr (30) angeordnetes Innenrohr (32), das am unteren Ende mit dem Raum zwischen dem Entspannungsbehälter (26) und Außenrohr (30) in Verbindung steht und sich über das Außenrohr (30) nach oben hinaus erstreckt, ein Mittelrohr (34) zwischen Innen- und Außenrohr sich über das Innenrohr (32) nach oben erstreckt, oberhalb des oberen Endes des Außenrohrs (30) eine Öffnung für Flotat einer Flotatsammelkammer (38) angeordnet ist und das Mittelrohr (34) im unteren Bereich mit einer Klarwasserpumpe (44) verbunden ist.

3. Vorrichtung nach Anspruch 2, **dadurch gekennzeichnet, dass** am Boden des Entspannungsbehälters (26) eine Feststoffpumpe (54) angeschlossen ist zur Förderung von Feststoffen in einen Schlammsammelbehälter (56).

4. Vorrichtung nach Anspruch 2 oder 3, **dadurch gekennzeichnet, dass** das Verhältnis der Längen und der Durchmesser der kommunizierenden Rohre (30, 32, 34) so gewählt ist, dass bis zu einer Neigung von 22° bis 23° gegenüber der Vertikalen eine Trennung von Klarwasser und Flotat gewährleistet ist.

5. Vorrichtung nach einem der Ansprüche 2 bis 4, **dadurch gekennzeichnet, dass** die Klarwasserpumpe (44) vom Druck in einer Leitung (42) zur Klarwasserpumpe (44) steuerbar ist.

6. Vorrichtung nach einem der Ansprüche 1 bis 5, **dadurch gekennzeichnet, dass** die Speisepumpe (14) von der Menge an Rohwasser im Rohwasserbehälter (10) steuerbar ist.

7. Vorrichtung nach einem der Ansprüche 2 bis 6, **dadurch gekennzeichnet**, in der der Leitung stromabwärts der Klarwasserpumpe eine UV-Bestrahlungsvorrichtung (46) zugeordnet ist.

8. Vorrichtung nach einem der Ansprüche 1 bis 7, **dadurch gekennzeichnet, dass** im Entspannungsbehälter (26) mindestens eine an eine Luftdruckquelle angeschlossene Ringleitung (62) angeordnet ist, die mit einer Reihe von Öffnungen versehen ist.

9. Vorrichtung nach Anspruch 8, **dadurch gekennzeichnet, dass** im Höhenabstand zwei Ringleitungen (62) im Entspannungsbehälter (26) angeordnet sind.

10. Vorrichtung nach einem der Ansprüche 2 bis 9, **dadurch gekennzeichnet, dass** unterhalb des oberen Endes des Mittelrohres (34) eine diese umgebende konisch abfallende Fläche (36) angeordnet ist, die sich an einen Überlauf für Flotat anschließt und die eine Flotatsammelkammer (38) nach unten begrenzt.

11. Vorrichtung nach einem der Ansprüche 1 bis 10, **dadurch gekennzeichnet, dass** alle Bauteile der Vorrichtung auf einer gemeinsamen Grundplatte angeordnet sind.

## Claims

1. A device for clarifying wastewater, preferably on ships, having the following features:
a tank (10) for untreated water is connected to a pressure tank (16) via a macerator (12) and a feed pump (14),
the pressure tank (16) is connected to a compressed air source (18) so that the untreated water in the pressure tank (16) is saturated with air,
the pressure tank (16) is connected via a line (24) to a decompression tank (26) in which flotate and clarification water can be separated from each other,
an expansion valve (26b) is inserted in the line (24), and
a dosing pump (28) for flocculant is connected to the line (24) between expansion valve (26b) and decompression tank (26) and a fixed-bed reactor (49) is arranged in the bottom area of the decompression tank (26).

2. The device according to claim 1, **characterized in that** an outer pipe (30) arranged in the decompression tank (26) ends in the line (24), an inner pipe (32) arranged in the outer pipe (30) and connected at the bottom end to the area between the decompression tank (26) an outer pipe (30) extends upward above the outer pipe (30), a middle pipe (34) between the inner and outer pipe extends upward above the inner pipe (32), an opening is arranged for flotate of a flotate collection chamber (38) above the top end of the outer pipe (30), and the middle pipe (34) is connected to a clarification water pump (44) in the bottom area.

3. The device according to claim 2, **characterized in that** a solids pump (54) is connected to the floor of the decompression tank (26) to convey solids to a sludge collection tank (56) .

4. The device according to claim 2 or 3, **characterized in that** the relationship of the lengths to the diameters of the communicating pipes (30, 32, 34) is selected to ensure the separation of clarification water and flotate up to a slope of 22° to 23° in relation to the verticals.

5. The device according to one of claims 2 to 4, **characterized in that** the clarification water pump (44) can be controlled by the pressure in a feed line (42) to the water pump (44).

6. The device according to one of claims 1 to 5, **characterized in that** the feed pump (14) can be controlled by the amount of untreated water in the untreated water tank (10).

7. The device according to one of claims 2 to 6, **characterized in that** a UV irradiation device (46) is arranged downstream of the clarification water pump (44).

8. The device according to one of claims 1 to 7, **characterized in that** at least one ring main (62) connected to a compressed air source is arranged in the decompression tank (26), the ring main being provided with a series of openings.

9. The device according to claim 8, **characterized in that** two ring mains (62) are arranged at different heights in the decompression tank (26).

10. The device according to one of claims 2 to 9, **characterized in that** a conically sloping surface (36) is arranged below the top end of the middle pipe (34) and surrounds it and connects to an overflow for flotate and delimits the bottom of a flotate collection chamber (38).

11. The device according to one of claims 1 to 10, **characterized in that** all of the components of the device are arranged on a common base plate.

## Revendications

1. Dispositif d'épuration d'eaux usées de préférence sur des navires, avec les caractéristiques suivantes :
un récipient (10) pour eau brute est relié par le biais d'un broyeur (12) (macérateur) et d'une pompe d'alimentation (14) à un récipient sous pression (16),
le récipient sous pression (16) est relié à une source d'air comprimé (18) de telle sorte que l'eau brute est saturée en air dans le récipient sous pression (16),
le récipient sous pression (16) est relié par le biais d'une conduite (24) à un récipient de détente (26) dans lequel des rejets de flottation et de l'eau claire sont séparés l'un de l'autre,
une vanne de détente (26b) est montée dans la conduite (24),
une pompe de dosage (28) pour agent floculant est reliée à la conduite (24) entre la vanne de détente (26b) et le récipient de détente (26), et
un réacteur à lit fixe (49) est disposé dans la région inférieure du récipient de détente (26).

2. Dispositif selon la revendication 1, **caractérisé en ce qu'**un tuyau externe (30) dans lequel débouche la conduite (24) est disposé dans le récipient de détente (26), un tuyau interne (32) disposé dans le tuyaux externe (30) qui est en connexion à l'extrémité inférieure avec l'espace entre le récipient de détente (26) et le tuyau externe (30) et s'étend au-delà du tuyau externe (30) vers le haut, un tuyau central (34) entre le tuyau interne et le tuyau externe s'étend au-delà du tuyau interne (32) vers le haut, une ouverture pour rejets de flottation d'une chambre de collecte de rejets de flottation (38) est disposée au-dessus de l'extrémité supérieure du tuyau externe (30) et le tuyau central (34) est relié dans la région inférieure à une pompe d'eau claire (44).

3. Dispositif selon la revendication 2, **caractérisé en ce qu'**une pompe de matières solides (54) est raccordée au fond du récipient de détente (26) pour le transport de matières solides dans un récipient de collecte de boue (56).

4. Dispositif selon la revendication 2 ou 3, **caractérisé en ce que** le rapport des longueurs et des diamètres des tuyaux communicants (30, 32, 34) est choisi de sorte qu'une séparation de l'eau claire et des rejets de flottation est garantie jusqu'à une inclinaison de 22° à 23° par rapport à la verticale.

5. Dispositif selon une des revendications 2 à 4, **caractérisé en ce que** la pompe d'eau claire (44) peut être commandée par la pression dans une conduite (42) vers la pompe d'eau claire (44).

6. Dispositif selon une des revendications 1 à 5, **caractérisé en ce que** la pompe d'alimentation (14) peut être commandée par la quantité d'eau brute dans le récipient d'eau brute (10).

7. Dispositif selon une des revendications 2 à 6, **caractérisé en ce qu'**un dispositif d'irradiation à rayons UV (46) est associé en aval à la pompe d'eau claire dans la conduite.

8. Dispositif selon une des revendications 1 à 7, **caractérisé en ce qu'**au moins une conduite circulaire (62) raccordée à une source d'air comprimé est disposée dans le récipient de détente (26), laquelle est pourvue d'une série d'ouvertures.

9. Dispositif selon la revendication 8, **caractérisé en ce que** deux conduites circulaires (62) sont disposées dans le récipient de détente (26) à écart en hauteur.

10. Dispositif selon une des revendications 2 à 9, **caractérisé en ce qu'**une face (36) entourant le dispositif, en pente de manière conique, est disposée en dessous de l'extrémité supérieure du tuyau central (34), laquelle se raccorde à un trop-plein pour rejets de flottation et limite vers le bas une chambre de collecte de rejets de flottation (38).

11. Dispositif selon une des revendications 1 à 10, **caractérisé en ce que** tous les composants du dispositif sont disposés sur un socle commun.
